# EUROPÄISCHE PATENTANMELDUNG

(11) **EP 0 962 701 A2**
(43) Veröffentlichungstag der Anmeldung: **08.12.1999**
(21) Anmeldenummer: 99103338.2
(22) Anmeldetag: 20.02.1999
(51) Int. Cl.: F23L 11/00, F23J 13/02

(54) **Rückstromsicherung für Abgasanlagen**

(30) Priorität: 05.06.1998 DE 19825124
(71) Anmelder: Skoberne, Willi, D-64342 Seeheim-Jugenheim (DE)
(72) Erfinder: Skoberne, Willi, D-64342 Seeheim-Jugenheim (DE)
(74) Vertreter: Katscher, Helmut, Dipl.-Ing.

(57) **Zusammenfassung**

Eine Rückstromsicherung für Abgasanlagen weist ein als T-Stück (4) ausgeführtes Ventilgehäuse auf, das mit einem unteren vertikalen Leitungsstutzen (3) an einen Heizungskessel (1) angeschlossen ist. Ein davon abgezweigter, angenähert horizontaler Ausgangsstutzen (7) ist an eine Abgasleitung (8) angeschlossen. Eine Kugel (9) ruht auf einem Ventilsitz (10) im unteren vertikalen Leitungsstutzen (3). Ein damit fluchtender oberer vertikaler Leitungsstutzen (5) bildet einen Aufnahmeraum für die Kugel (9) im angehobenen Zustand und ist durch einen abnehmbaren Deckel (6) verschlossen. Das Ventilgehäuse (4) ist mit allseitigem Abstand in einem Leitungs-T-Stück einer Zuluftleitung angeordnet, deren oberer vertikaler Leitungsstutzen (17) durch einen abnehmbaren Deckel (18) verschlossen ist.

## Beschreibung

Die Erfindung betrifft eine Rückstromsicherung für Abgasanlagen mit einem Rückstromsicherungsventil zwischen einem Heizungskessel und einer Abgasleitung, das einen in einem Ventilgehäuse auf einem Ventilsitz ruhenden, höhenbeweglichen Absperrkörper aufweist.

Heizungskessel und andere Brennwertgeräte, bei denen die Abgase mit Überdruck in die Abgasanlage abgeführt werden, müssen mit einer Rückstromsicherung am Anschluß an die Abgasanlage ausgestattet sein, wenn mehrere solche Brennwertgeräte an eine gemeinsame Abgasleitung angeschlossen sind. Die Rückstromsicherung stellt sicher, daß bei ausgeschaltetem Brennwertgerät keine Abgase aus der Abgasleitung in den Raum gelangen können, in dem das Brennwertgerät aufgestellt ist.

Bei einer bekannten Rückstromsicherung dieser Gattung (DE-GM 92 03 054.8) ist das den höhenbeweglichen Absperrkörper aufnehmende Ventilgehäuse, das auf den Heizungskessel oder ein anderes Brennwertgerät aufgesetzt ist, so ausgeführt, daß die von unten eintretenden Abgase nach dem Passieren des Ventilsitzes und des Absperrkörpers in gleicher Richtung nach oben in die Abgasleitung weiter strömen.

Üblicherweise ist die Abgasleitung danach horizontal abgewinkelt.

Bei dieser Anordnung ist das Innere des Ventilgehäuses für Kontroll- und Reinigungszwecke nur schwer zugänglich. Dies gilt insbesondere, wenn die Abgasleitung konzentrisch in einer Zuluftleitung angeordnet ist, die zum Heizungskessel führt.

Aufgabe der Erfindung ist es daher, eine Rückstromsicherung der eingangs genannten Gattung so auszuführen, daß mit geringem Bauaufwand eine gute Zugänglichkeit des Rückstromsicherungsventils und ggf. auch einer umgebenden Zuluftleitung zu Kontrolizwecken gewährleistet ist.

Diese Aufgabe wird erfindungsgemäß dadurch gelöst, daß das Ventilgehäuse als T-Stück mit zwei miteinander fluchtenden vertikalen Leitungsstutzen ausgeführt ist, von denen ein angenähert horizontaler Ausgangsstutzen abgezweigt und an die Abgasleitung angeschlossen ist, daß der Ventilsitz in dem unteren, an den Heizungskessel angeschlossenen vertikalen Leitungsstutzen angeordnet ist, und daß der obere, durch einen Deckel verschlossene vertikale Leitungsstutzen einen Aufnahmeraum für den Absperrkörper im angehobenen Zustand bildet.

Der den Absperrkörper und den Ventilsitz aufnehmende Bereich des Ventilgehäuses ist nach Abnehmen des Deckels von oben durch den oberen vertikalen Leitungsstutzen leicht zugänglich, ohne daß hierfür Teile der Abgasanlage abgebaut werden müßten. Zugleich bildet der obere vertikale Leitungsstutzen einen Raum, in den der Absperrkörper eintreten kann, wenn er durch die Abgasströmung von seinem Ventilsitz angehoben wird. Der so angehobene Absperrkörper behindert die Abgasströmung nicht. Der Durchmesser des Ventilgehäuses muß nur so groß gewählt werden, daß eine freie Beweglichkeit des Absperrkörpers gewährleistet ist; im Vergleich zu dem bekannten Stand der Technik ist es nicht erforderlich, seitlich neben dem Absperrkörper einen ausreichenden Durchtrittsquerschnitt für das Abgas vorzusehen, das den Absperrkörper hierbei umströmen muß.

Gemäß einer vorteilhaften Ausgestaltung des Erfindungsgedankens kann das T-förmige Ventilgehäuse mit allseitigem Abstand in einem Leitungs-T-Stück einer die Abgasleitung umgebenden Zuluftleitung angeordnet sein, deren oberer vertikaler Leitungsstutzen ebenfalls mit einem abnehmbaren Deckel verschlossen ist.

Nach dem Abnehmen dieses Deckels kann die aus Sicherheitsgründen wichtige und vorgeschriebene Kontrolle durchgeführt werden, daß der der Frischluftzufuhr dienende Ringspaltraum der Zuluftleitung auch in dem Umgebungsbereich des Ventilgehäuses frei durchgängig ist.

Nach dem Abnehmen dieses Deckels des Leitungs-T-Stücks der Zuluftleitung ist auch der ebenfalls in einfacher Weise abzunehmende Deckel des T-förmigen Ventilgehäuses zugänglich. Alle erforderlichen Kontroll-, Wartungs- und Reparaturarbeiten im Bereich des Rückstromsicherungsventils können daher nach einfacher Abnahme dieser beiden Deckel durchgeführt werden.

Vorzugsweise ist der Absperrkörper eine Kugel, die auf einem nach innen vorspringenden Bund des unteren vertikalen Leitungsstutzens als Ventilsitz ruht. Die konstruktive Ausführung des Ventilgehäuses ist damit sehr einfach, weil in Abwandlung eines herkömmlichen Leitungs-T-Stücks nur zusätzlich ein nach innen vorspringender Bund als Ventilsitz vorgesehen werden muß.

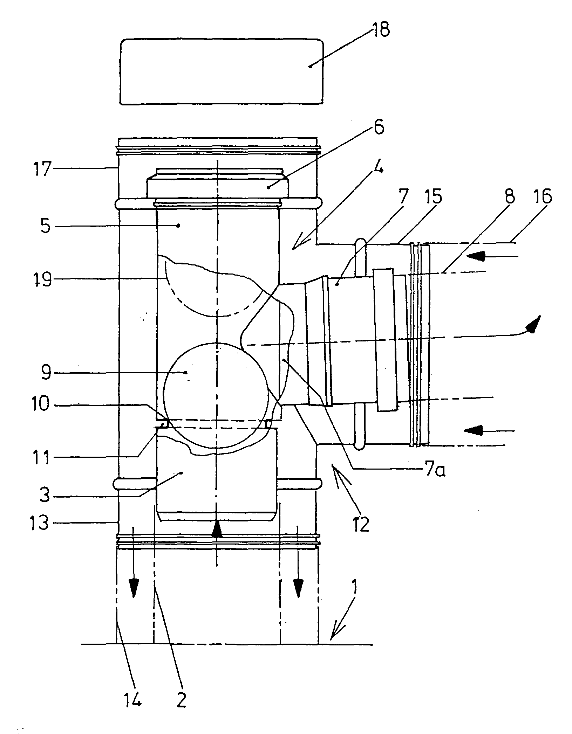

Nachfolgend wird ein Ausführungsbeispiel der Erfindung näher erläutert, das in der Zeichnung dargestellt ist.

Die Zeichnung zeigt in einer Seitenansicht und teilweise im Schnitt eine Rückstromsicherung für eine Abgasanlage eines Heizungskessels 1, dessen Oberwand in der Zeichnung nur angedeutet ist. Ein in der Zeichnung mit strichpunktierten Linien ebenfalls nur angedeuteter Abgas-Austrittsstutzen 2 des Heizungskessels 1 ist an einen unteren vertikalen Leitungsstutzen 3 eines als Leitungs-T-Stück 4 ausgeführten Ventilgehäuses angeschlossen. Ein oberer vertikaler Leitungsstutzen 5 des Leitungs-T-Stücks 4 fluchtet mit dem unteren vertikalen Leitungsstutzen 3 und ist durch einen abnehmbaren Deckel 6 verschlossen.

Von den miteinander fluchtenden vertikalen Leitungsstutzen 3 und 5 des T-Stücks 4 ist ein angenähert horizontaler, in Strömungsrichtung leicht ansteigender Ausgangsstutzen 7 abgezweigt, an denen eine in der Zeichnung nur angedeutete weiterführende Abgasleitung 8 angeschlossen ist.

Das T-Stück 4 bildet ein Ventilgehäuse eines Rückstromsicherungsventils, in dem als höhenbeweglicher Absperrkörper 9 eine Kugel angeordnet ist, die im geschlossenen Zustand des Rückstromsicherungsventils auf einem Ventilsitz 10 ruht. Der Ventilsitz 10 wird von einem nach innen vorspringenden Bund 11 im unteren vertikalen Leitungsstutzen 3 gebildet.

Das T-förmige, in der Zeichnung nur teilweise aufgebrochen dargestellte Ventilgehäuse 4 ist mit allseitigem Abstand in einem Leitungs-T-Stück 12 angeordnet, dessen unterer vertikaler Leitungsstutzen 13 an einen Zuluftstutzen 14 des Heizungskessels 1 angeschlossen ist. Ein hiervon rechtwinklig abgezweigter horizontaler Leitungsstutzen 15 ist an eine die Abgasleitung 8 konzentrisch und mit Abstand umgebende Zuluftleitung 16 angeschlossen.

Ein oberer vertikaler Leitungsstutzen 17 des Leitungs-T-Stücks 12, der mit dem unteren vertikalen Leitungsstutzen 13 fluchtet, ist oben durch einen abnehmbaren, in der Zeichnung angehoben dargestellten Deckel 18 verschlossen.

Im Betrieb wird die den Absperrkörper 9 bildende Kugel durch den Überdruck der Abgase des Heizungskessels 1 von ihrem Ventilsitz 10 angehoben und tritt in der mit strichpunktierten Linien angedeuteten Weise in den oberen vertikalen Leitungsstutzen 5 ein, der somit einen Aufnahmeraum 19 für die Kugel 9 im angehobenen Zustand bildet. Das Abgas kann sodann ungehindert durch den unteren vertikalen Leitungsstutzen 3 und den angeschlossenen horizontalen Leitungsstutzen 7 strömen. Wenn kein Überdruck des Abgases mehr vorliegt, senkt sich die Kugel 9 wieder auf den Ventilsitz 10 und bildet dadurch eine Rückstromsperre. Auf diese Weise wird verhindert, daß das Abgas, das in der Abgasleitung 8 unter dem Überdruck von anderen angeschlossenen Heizungskesseln steht, in den Heizungskessel 1 zurückströmt.

Erforderlichenfalls kann eine Rippe 7a oder eine andere Führungseinrichtung am Eingang des horizontalen Leitungsstutzens 7 vorgesehen sein, um die Kugel 9 zu führen und zu verhindern, daß sie sich in den Leitungsstutzen 7 hineinbewegt.

Die Frischluftzufuhr zum Heizungskessel 1 erfolgt durch den Ringspalt zwischen der Abgasleitung 8 und der Zuluftleitung 16, sowie durch den Ringspalt zwischen dem T-förmigen Ventilgehäuse 1 und dem mit Abstand umgebenden Leitungs-T-Stück 12. Nach dem Abnehmen des Deckels 18 kann dieser Ringspalt auch im Bereich des Rückstromsicherungsventils und des Anschlusses an den Heizungskessel 1 der vorgeschriebenen Sichtkontrolle unterzogen werden, so daß ein unbehinderter Strömungsquerschnitt sichergestellt ist.

Nach dem Abnehmen des Deckels 18 ist auch der Deckel 6 des Ventilgehäuses 4 zugänglich. Das Ventilgehäuse 4 kann auf diese Weise zu Kontroll- und Wartungszwecken geöffnet werden.

## Patentansprüche

1. Rückstromsicherung für Abgasanlagen mit einem Rückstromsicherungsventil zwischen einem Heizungskessel (1) und einer Abgasleitung (8), das einen in einem Ventilgehäuse auf einem Ventilsitz (10) ruhenden, höhenbeweglichen Absperrkörper (9) aufweist, dadurch gekennzeichnet, daß das Ventilgehäuse als T-Stück (4) mit zwei miteinander fluchtenden vertikalen Leitungsstutzen (3, 5) ausgeführt ist, von denen ein angenähert horizontaler Ausgangsstutzen (7) abgezweigt und an die Abgasleitung (8) angeschlossen ist, daß der Ventilsitz (10) in dem unteren, an den Heizungskessel (1) angeschlossenen vertikalen Leitungsstutzen (3) angeordnet ist, und daß der obere, durch einen Deckel (6) verschlossene vertikale Leitungsstutzen (5) einen Aufnahmeraum (19) für den Absperrkörper (9) im angehobenen Zustand bildet.

2. Rückstromsicherung nach Anspruch 1, dadurch gekennzeichnet, daß das T-förmige Ventilgehäuse (4) mit allseitigem Abstand in einem Leitungs-T-Stück (12) eine die Abgasleitung (8) umgebenden Zuluftleitung (16) angeordnet ist, deren oberer vertikaler Leitungsstutzen (17) mit einem abnehmbaren Deckel (18) verschlossen ist.

3. Rückstromsicherung nach Anspruch 1, dadurch gekennzeichnet, daß der Absperrkörper (9) eine Kugel ist, die auf einem nach innen vorspringenden Bund (11) des unteren vertikalen Leitungsstutzens (3) als Ventilsitz (10) ruht.
